# EUROPEAN PATENT APPLICATION

(11) **EP 1 270 458 A1**
(43) Date of publication of application: **02.01.2003**
(21) Application number: 02077489.9
(22) Date of filing: 25.06.2002
(51) Int. Cl.: B65G 47/14, B65B 35/56

(54) **Supplier**

(30) Priority: 29.06.2001 NL 1018415
(71) Applicant: CFS Weert B.V., 6006 RV Weert (NL)
(72) Inventor: Rietjens, Petrus W. H., 6011 RH Ell (NL); Asma, Seferinus J., 5503 CM Veldhoven (NL)
(74) Representative: Ferguson, Alexander

(57) **Abstract**

Device for supplying single articles provided with a head and stick, such as lollipops, to be packed in bags, comprising a supply station for the articles in a disorderly flow, a discharge station for discharge of the articles in an orderly flow for further processing or treatment in the packaging process, a distribution disc connecting to the supply station and the discharge station and having a series of holes at its circumference for accommodation of the heads of the articles, means for urging the heads of the articles in the holes, means for keeping down the sticks of the articles the heads of which have been accommodated in the holes, during the movement of the distribution disc from the supply station to the discharge station, the holes being vertically continuous and the means for keeping down being absent at the location of the discharge station, the discharge station being placed vertically underneath the distribution disc.

## Description

The invention relates to a supplier for supplying single articles provided with a head and stick, such as lollipops, to be packed in bags.

The invention further relates to a machine for packaging articles, such as lollipops, in foil.

It is known to package lollipops apiece by means of a foil wrapper arranged over the head of the lollipop. This can for instance be done by means of a so-called bunch wrap, in which a wrapper is twisted at the side of the lollipop's stick, in a so-called double twist, in which both at the side of the stick and at the end side the wrap is twisted and by means of a so-called sachet packaging.

The lollipops are then cast on an assembly of an outer distribution disc rotating in conveyance direction to a discharge station, which distribution disc at its circumference is provided with holes for accommodating one lollipop head at a time, and a spread disc lying within it driven in opposite direction. The spread disc rotates slightly faster than the distribution disc, so that the lollipops do not pile up. Between both stations a partition is provided which however does not extend up to above the holes in the distribution disc. At its circumference the distribution disc is provided with slits for accommodating the sticks of the lollipops when the heads of the lollipops have been accommodated in the holes. Furthermore fixed rods have been provided for urging the sticks into the slits and keeping them down and oriented radially outwards. Below the hole area of the distribution disc another driven cylinder has been arranged, which is positioned to engage the lower side of the heads accommodated in the holes so as to exert a radial inward force on them.

At the location of the discharge station, where the sticks are horizontally oriented from the distribution plate radially outwards, a further conveyor has been positioned provided with a series of small clamps that each in a synchronised manner are able to grab a lollipop stick and then lift the lollipops in question out of the distribution disc and convey them to a point of discharge to the packaging machine situated at a distance.

It is further known to package lollipops separately in a so-called pillow pack, by supplying them to a horizontal packaging machine, in which the lollipops are placed on a horizontal belt provided with flights and thus are horizontally introduced into a horizontal foil tubing formed by the packaging machine. The foil tubing is here pulled forward by transverse sealing rolls.

It is an object of the invention to provide a supply device of the type mentioned in the preamble which has a simple set-up.

It is a further object of the invention to provide a packaging machine of the type mentioned in the preamble which in horizontal sense takes up little space.

From one aspect the invention to that end provides a device for supplying single articles provided with a head and stick, such as lollipops, to be packed in bags, comprising a supply station for the articles in a disorderly flow, a discharge station for discharge of the articles in an orderly flow for further processing or treatment in the packaging process, a distribution disc connecting to the supply station and the discharge station and having a series of holes at its circumference for accommodation of the heads of the articles, means for urging the heads of the articles in the holes, means for keeping down the sticks of the articles the heads of which have been accommodated in the holes, during the movement of the distribution disc from the supply station to the discharge station, the holes being vertically continuous and the means for keeping down being absent at the location of the discharge station, the discharge station being placed vertically underneath the distribution disc.

In the invention efficient use is made of the presence of the holes, by simply letting the articles, such as lollipops, fall through them for discharge to the next process. No additional means such as a conveyor with clamps are necessary to that end, so that the arrangement in this respect can be kept simple and little space is taken up.

The supply device according to the invention is very suitable to be used in combination with vertical form-fill-seal machines. The supply device can then simply be placed above the supply tube of a vertical form-fill-seal machine, so that immediate discharge to it is realised and the falling movement of the articles, such as lollipops, from the distribution disc is immediately used. The lollipops or other singled articles are packaged here in foil bags in a reliable and quick manner, while using the falling movement of the articles. Considering the falling speed of the articles, the distance of the supply station above the location of packaging is adjusted to the operation speed of the packaging machine.

It is noted that from US patent specification 4.024.058 a supply device for lollipops is known, which is provided with a distribution disc and a discharge opening through which lollipops can fall vertically from the distribution disc. Said provision is intended for lollipops that have not been provided with a stick or lollipops the stick of which has been bent. The usual discharge of lollipops takes place with a usual device provided with grippers.

It is preferred that the supply station, in circumferential direction of the distribution disc, connects to or vertically -at least partially- coincides with the discharge station, so that taking up space is kept to a minimum.

In the known packaging methods for singled articles, such as lollipops, there is no or hardly any freedom in the composition of the contents.

It is a further object of the invention to provide a packaging machine with which packaging bags can be made that have been filled with one or more articles. It is a further object to provide a packaging machine with which a large number of possibilities to package articles is achieved.

From a further aspect the invention to that end provides a vertical form-fill-seal machine having an upright fill or supply tube over which a foil tubing is guided downwards, having transverse sealing means placed immediately beneath the fill tube, the machine further comprising at least one supply device for singled articles, such as lollipops, placed above the fill tube, particularly a supply device according to the invention.

It is also simply possible to fill the bags with several articles, such as lollipops, by placing two singling suppliers adjacent to each other and above the fill tube, and dropping the singled articles via slides into the fill tube. The articles can be similar, but it is also possible to package a confectionery article together with a little toy.

Via another way, such as via a dosage device dispensing in the fill tube, it is also possible to supply bulk goods such as flavouring powder.

Preferably the supply device is placed on the form-fill-seal machine in a manner so as to be adjustable in height. In this way vertical room can be provided for an additional supply to the fill tube for articles to packaged along, such as a little toy.

It may happen that in the supply of articles apiece a gap occurs. In the aforementioned horizontal packaging machine with flights, a flight will not take along a lollipop. Due to the horizontal drive the transport of the foil web cannot be stopped and continued quickly enough. It therefore often occurs that an empty packaging is made. This is a waste of material and disrupts the further packaging process.

It is a further object of the invention to improve on this. To that end the vertical form-fill-seal machine is provided with means active along the fill tube for downward driving the foil tubing and furthermore provided with a sensor for noticing the passage of an article dispensed by the discharge station, which sensor is functionally connected to a central control unit of the machine, which controls the means for the downward driving of the foil tubing and the transverse sealing jaws, also depending on the signal of the sensor. In such a machine the drive of the foil tubing can be controlled entirely, and the movement of the foil tubing can at leat almost immediately be stopped end resumed, in which way a clear adjustment to the (falling) supply of the articles can be realised. Thus it is made possible that the control unit does not activate the conveyor belts for the packaging material and the sealing jaws when no signal is received from the sensor. Empty packagings are thus prevented. It is also possible here to adapt the control unit such that each time after several, for instance two, passages of falling articles, such as lollipops, noticed by the sensor, the foil driving means are activated. Thus two articles originating from the same supplier can be packaged per bag.

The invention furthermore provides a method for packing single articles provided with a head and a stick, such as lollipops, by means of a form-fill-seal machine, the articles being supplied in an orderly flow to the form-fill-seal machine by means of the supply device according to the invention via its discharge station.

The invention will be elucidated on the basis of an exemplary embodiment shown in the attached drawings, in which:
Figure 1 shows a view in perspective of a vertical form-fill-seal machine having a supplier according to the invention; and
Figure 2 shows a schematic view of a supplier according to the invention.

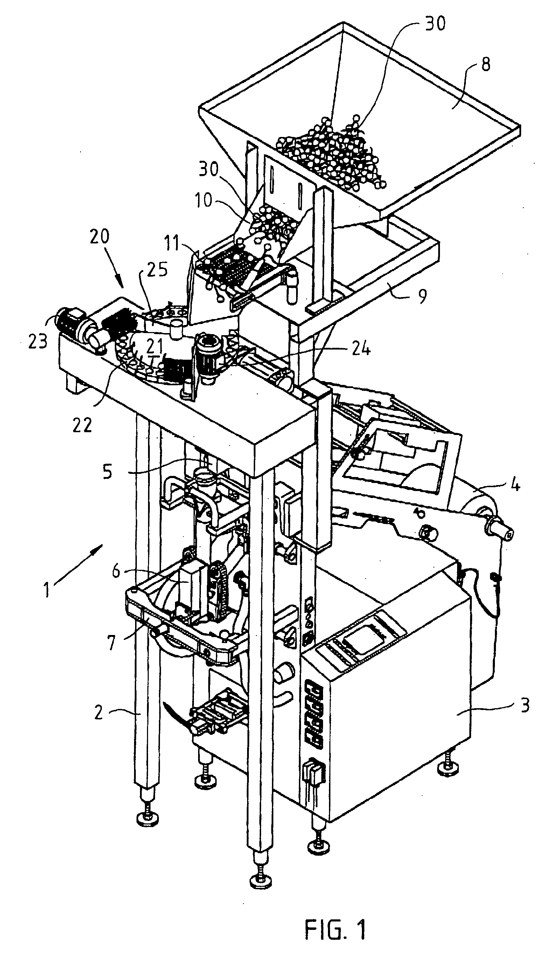

The form-fill-seal machine 1 of figure 1 comprises a frame 2, an operation cabinet 3 with in there a central control unit for the form-fill-seal machine 1, a supply roll 4 for packaging foil and a fill tube 5 which is connected in the usual manner to a form shoulder that is not further shown and which is open towards the top. Along the fill tube 5 drive belts 6 have been positioned for downward conveyance of the foil tubing formed around the form shoulder -that is not shown-. Below it, at the lower end of the fill tube, a transverse sealing station 7 is positioned, for sealing and separating the bags in the known manner, after the bags have been filled via the fill tube 5 with the articles to be packaged.

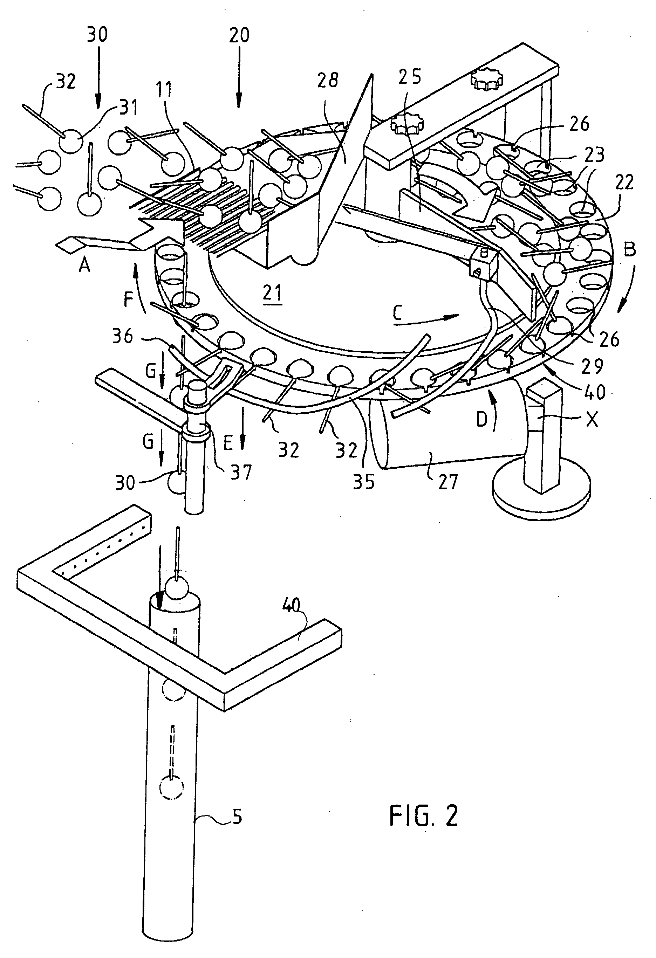

The articles to be packaged in this case are lollipops 30, having a head 31 and a stick 32 (see figure 2), and are supplied to the fill tube 5 by means of supplier 20, further shown in figure 2.

The form-fill-seal machine 1 to that end is provided with a stock funnel 8, mounted on auxiliary frame 9 that is fixed to the frame 2. The funnel 8 has a sideward exit 10, which leads to supply grid 11. The supply grid 11 ends above the supplier 20, comprising a number of driving motors 23 and 24, for a spread disc 21 and a distribution disc 22 situated around it, respectively. Furthermore a partition 25 is shown, which retains the lollipops in rotation direction of the discs.

In figure 2 it is shown that the distribution disc 22 with the upper surface connects to the upper surface of the spread disc 21. The distribution disc 22 is provided with a circumferential series of holes 23, that are continuous. The holes 23 have such dimensions that the heads 31 of lollipops 30 fit in there without clamping. At the upper edge the holes 32 are provided with a slit 26 extending radially to the outside so as to open in the circumferential edge of the distribution disc 22.

The partition 25 is positioned such that the lollipops 30 are urged radially to the outside towards the distribution disc 22.

Downstream of the partition 25 a rod 29 has been arranged, which extends above the distribution disc 22 and travels along in circumferential direction and inclines downwards. Downstream of it there is a second rod 35, which is stationarily attached to a holder 37 that is fixed to the frame, and also extends in circumferential direction, and which is downwardly oriented in an inclined manner in the first upstream portion. The rod 35 ends at the location of end 36, which, considered in horizontal direction, is situated near the entrance opening of the fill tube 5, and in vertical direction above it.

Immediately downstream of the partition 25 another roll 27 is positioned below the distribution disc 22, which roll 27 rotates in the direction D and moves with the surface along the lower end of the holes 23.

In operation the lollipops 30, coming out of the funnel 8, via exit 10, over grid 11, guided by partition 28, are supplied in direction A on the assembly of spread plate 21 and distribution plate 22. The distribution disc 22 here revolves in the direction B, and the spread disc C revolves at a lower speed but indeed in opposite direction in the direction C, so as to bring the lollipops 30 with their heads 31 into the holes 23 in an as fluent as possible manner, in cooperation with the partition 25. In that track, until connection to the roll 27, the holes 23 are downwardly shielded by edge plate 40, to keep the heads 31 of the lollipops 30 in the holes 23.

The sticks 32 may then still be in any kind of position. They are urged radially to the outside first of all by the partition 25, and after that under the influence of roll 27, which engages the lower side of the heads 31 and urges them radially inwards, as a result of which the stick 32 tilts radially to the outside. The rod 29 here guides the sticks 32 until they -at least almost- end up in slits 26. The next rod 35 completes this movement of the sticks 32, so that they extend horizontally and radially outwards with respect to the distribution disc 22. In the portion connecting to its downwardly inclined portion, the rod 35 here keeps the sticks 32 in that position, by exerting a downward force E on them. In that track of the travel of the distribution disc 22 the holes 23 have become downwardly free. When the sticks 32 have passed beyond the end 36 of the rod 35, there no longer is a keeping-down force E, and the lollipops 30, because the head 31 is heavier than the stick 32, will tilt in the direction F, leave the holes 23 with the head 31 in downward direction, and drop vertically in the direction G, and then end up in the fill tube 5 lying straight underneath it. The lollipops 30 are then subsequently packaged in the bags to be made with the form-fill-seal machine 1.

The control unit 3 is adapted here such that the distribution disc 22 brings the holes 23 past the end 36 of the rod 35 with a speed and frequency, that is adjusted to the speed and frequency of the drive belts 6 and the transverse sealing station 7.

Just above the fill tube 5 a sensor 40 comprising a frame with transmitter and receiver has been arranged, which notices the passage of the lollipops in the direction G. When a passage (or alternatively for instance a number of passages) is noticed, the drive belts 6 are operated via the control unit and a packaging is made.

## Claims

1. Device for supplying single articles provided with a head and stick, such as lollipops, to be packed in bags, comprising a supply station for the articles in a disorderly flow, a discharge station for discharge of the articles in an orderly flow for further processing or treatment in the packaging process, a distribution disc connecting to the supply station and the discharge station and having a series of holes at its circumference for accommodation of the heads of the articles, means for urging the heads of the articles in the holes, means for keeping down the sticks of the articles the heads of which have been accommodated in the holes, during the movement of the distribution disc from the supply station to the discharge station, the holes being vertically continuous and the means for keeping down being absent at the location of the discharge station, the discharge station being placed vertically underneath the distribution disc.

2. Device according to claim 1, the discharge station being placed above the supply tube of a vertical form-fill-seal machine.

3. Device according to claim 2, the supply station connecting to or vertically -at least partially- coinciding with the discharge station in circumferential direction of the distribution disc.

4. Device according to claim 2 or 3, the supply device, particularly the discharge station, being placed on the form-fill-seal machine in a manner so as to be adjustable in height.

5. Device according to any one of the claims 1-4, the disc at the outer edge being provided with radial slits for accommodation of the sticks, which slits connect to the holes.

6. Device according to any one of the claims 1-5, the means for keeping down being positioned for keeping down the sticks radially outwards with respect to the distribution disc, the means for keeping down preferably comprising a fixed rod positioned at the circumference of the distribution disc.

7. Device according to any one of the preceding claims, further comprising means for bringing the sticks into a substantially horizontal position on the distribution disc.

8. Vertical form-fill-seal machine having an upright fill or supply tube over which a foil tubing is guided downwards, having transverse sealing means placed immediately beneath the fill tube, the machine further comprising at least one supply device for singled articles such as lollipops, placed above the fill tube.

9. Vertical form-fill-seal machine according to claim 8, a supply device according to any one of the preceding claims being placed above the fill tube.

10. Vertical form-fill-seal machine according to claim 8 or 9, provided with means active along the fill tube for downward driving the foil tubing and furthermore provided with a sensor for noticing the passage of an article dispensed by the discharge station, which sensor is functionally connected to a central control unit of the machine, which controls the means for the downward driving of the foil tubing and the transverse sealing jaws, also depending on the signal of the sensor.

11. Method for packing single articles provided with a head and a stick, such as lollipops, by means of a form-fill-seal machine, the articles being supplied in an orderly flow by means of the supply device according to any one of the claims 1-7 via its discharge station, to the form-fill-seal machine.
